# EUROPEAN PATENT APPLICATION

(11) **EP 4 838 115 A1**
(43) Date of publication of application: **11.11.2026**
(21) Application number: 25175116.0
(22) Date of filing: 08.05.2025
(51) Int. Cl.: F16H 57/00, F16H 57/033, F16H 57/04, H02K 9/19, B60K 6/405, F16H 61/00, B60K 6/48, F16H 57/03, F16H 57/02

(54) **ELECTRIC MOTOR ASSEMBLY FOR A HYBRID DRIVE OF AN AGRICULTURAL MACHINE**

(71) Applicant: Deere & Company, Moline, IL 61265 (US)
(72) Inventor: VERGARA MARTINEZ, DANIEL, 68163 Mannheim (DE); PEREZ RAMIREZ, JAVIER, 68163 Mannheim (DE); JUNDALE, PRASHANT M., 68163 Mannheim (DE); TEKADE, PRANAY, 68163 Mannheim (DE); ECKMAN, WILLIAM, 68163 Mannheim (DE); PIERCE, JOHANN H., 68163 Mannheim (DE)
(74) Representative: Holst, Sönke

(57) **Abstract**

An electric motor assembly (31) includes an intermediate gearbox (48) and an electric motor (52), wherein the intermediate gearbox (48) comprises a gearbox housing (62) containing gears (74, 78, 80) connecting a rotor (88) of the electric motor (52) to an input/output shaft (64) of the intermediate gearbox (48). The input/output shaft (64) has an outwardly projecting end (66) on a first side of the gearbox housing (62) of the intermediate gearbox (48) and a recess (65) a second side of the gearbox housing (62), the projecting end (66) matching with the recess (65), such that the intermediate gearbox (48) can be (retrofitting) mounted between two elements with shafts mating with the input/output shaft (64). Also, the electric motor (52) can be mounted in a motor housing (84) with a lubricant inlet (104) and an opening (102) enabling lubricant flow from the motor housing (84) into the gearbox housing (62) for lubrication thereof.

## Description

The invention relates to an electric motor assembly including an intermediate gearbox and an electric motor, wherein the intermediate gearbox comprises a gearbox housing containing gears connecting a rotor of the electric motor to an input/output shaft of the intermediate gearbox.

### State of the art

Agricultural vehicles and machines are generally driven by combustion engines. For load peaks, it can be useful to provide additional power to the drivetrain of the agricultural machine by an electric motor powered by a battery which can be charged by the electric motor when driven in a generator mode. Normally, the agricultural machine is designed and manufactured to include the electric motor (see for example EP 2 778 003 A1 or EP 3 145 045 A2). Nevertheless, it might be desirable to provide an existing machine, be it on a production line or as a retrofit, with an additional electric motor without significant changes to the machine.

In the automotive area, some retrofit kits have been proposed with electric motors and transmissions for driving the vehicle (for example in cities) only with the electric motor. The motor is coupled via the transmission to the crankshaft of the engine (US 2011/0083309 A1) or to the drive shaft between a clutch and a differential gear which is driving the wheels (WO 2012/137151 A1), or the shift gearbox is disassembled and an intermediate part is added between the existing gearbox housing and cover, the intermediate part having a shaft on which one or more gears driven by the electric motor are provided (DE 10 2018 201 614 A1).

Further on, electric motors in agricultural machines provide power in the order of some 10 or even 100 kW and thus need to be cooled. In the prior art, the motor, battery and inverter for the electric drive are provided with an own cooling circuit including a radiator, cf. EP 4 454 912 A1. Another possibility is to cool the electric motor with oil in a first circuit and to lubricate the transmission with oil in a second circuit (US 5 372 213 A), whereby the respective oil flow to the transmission can be controlled by an orifice (US 11 114 921 B2).

### Task

The mounting location of the retroactively added transmission for the electric motor within the shift gearbox according to DE 10 2018 201 614 A1 has among others the disadvantage that only the propelling movement of the vehicle can be provided by means of the electric motor, while in agricultural vehicles additional components need to be driven, for example crop processing components in combines or PTO shafts in tractors.

Another disadvantage in the known cooling circuits for the transmission and the motor is that different circuits are provided, thus requiring different lines and pumps.

The underlying task of the invention is to avoid or at least reduce one or more the disadvantages described.

### Solution

According to the invention, this problem is solved by the teaching of claims 1 and 5, whereby features are listed in the other patent claims which further develop the solution in an advantageous manner.

An electric motor assembly includes an intermediate gearbox and an electric motor, wherein the intermediate gearbox comprises a gearbox housing containing gears connecting a rotor of the electric motor to an input/output shaft of the intermediate gearbox.

According to a first aspect, the input/output shaft has an outwardly projecting end on a first side of the gearbox housing of the intermediate gearbox and a recess a second side of the gearbox housing. The projecting end matches with the recess, such that the intermediate gearbox can be (in particular in a retrofitting manner or not needing modification of an existing machinery design) mounted between two elements with shafts mating with the input/output shaft.

According to a second aspect, the electric motor is mounted in a motor housing with a lubricant inlet and an opening enabling lubricant flow from the motor housing into the gearbox housing for lubrication thereof. Thus, only one lubrification circuit is used both to cool the motor as well as to lubricate the gears in the gearbox housing.

### Embodiment

An embodiment of the invention is explained based on the illustrations. It shows:
- Fig. 1: a schematic, partially cut side view of a combine harvester,
- Fig. 2: a schematic top view of parts of the drivetrain of the combine,
- Fig. 3: a perspective view of a main engine gearbox and an electric motor assembly with an intermediate gearbox and an electric motor within the drivetrain between the engine and a hydraulic pump assembly,
- Fig. 4: a vertical section through the electric motor assembly,

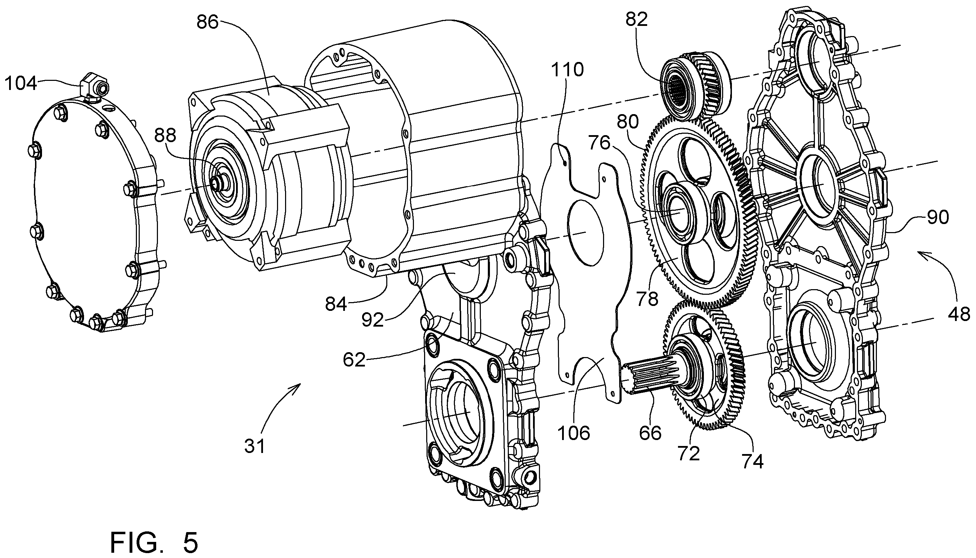

- Fig. 5: an exploded view of the electric motor assembly,
- Fig. 6: a section through the intermediate gearbox along line 6-6 of fig. 4,
- Fig. 7: a view into the intermediate gearbox along line 7-7 of fig. 4, and

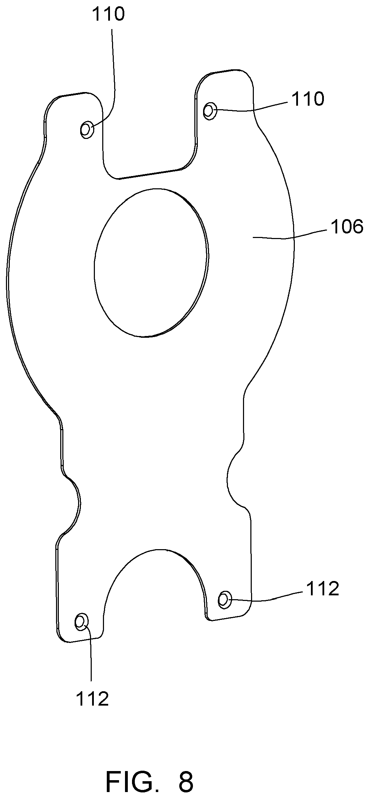

- Fig. 8: a view onto an oil flow separation plate of the intermediate gearbox.

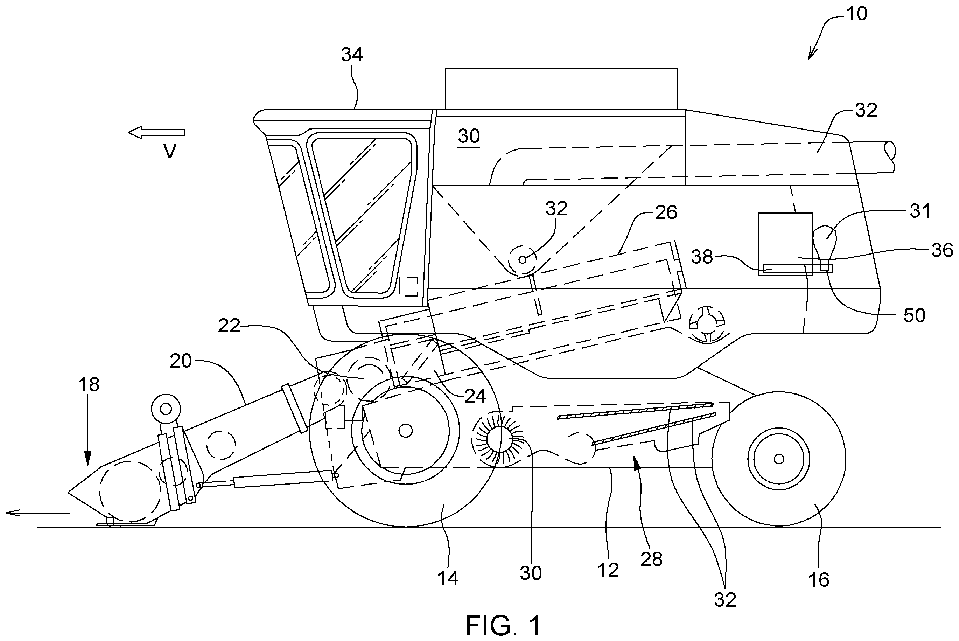

Figure 1 shows an agricultural combine 10 with a chassis 12 with driven front wheels 14 and steerable rear wheels 16 engaged with the ground, which are attached to chassis 12 and are used to propel the combine 10 in a forward direction V which, in Figure 1, runs to the left. The operation of the combine 10 is controlled by an operator from an operator's cab 34. A header 18 is used to harvest crops containing grain and feed them to a feeder house 20. The harvested crop is fed through the feeder house 20 to an infeed beater 22. The infeed beater 22 directs the crop through an inlet transition section 24 to two axial crop processing units 26, arranged side by side. In the following, directional indications, such as front and rear, refer to the forward direction of the combine 10, which runs to the left in Figure 1.

Grain and chaff falling through a concave or a separation grate assigned to crop processing units 26 are fed into a cleaning system 28 with a blower 30 and slat sieves 32 that can be moved in an oscillating manner. The cleaning system 28 removes the chaff and feeds the clean grain via an auger conveyor to an elevator for clean grain (not shown). The clean grain elevator places the clean grain in a grain tank 30. The clean grain in grain tank 30 can be unloaded onto a grain cart, trailer or truck by unloading auger conveyors 32. Crop remaining at the rear end of the lower sieve 32 is fed back to the crop processing units 26 or a re-thresher by means of an auger conveyor and a tailings conveyor (not shown). The crop residues delivered at the rear end of the upper sieve, which consist mainly of chaff and small straw particles, are conveyed to the rear and into a straw chopper.

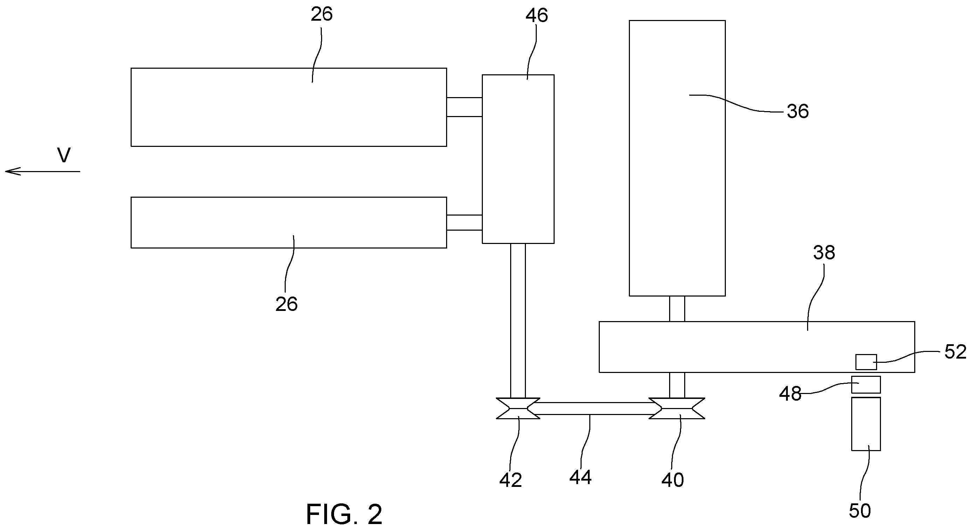

The movable, driven components of combine 10 are driven by a combustion engine 36. Reference is now made to fig. 2, showing parts of the drivetrain of combine 10. The crankshaft of engine 36 is connected to an input of main engine gearbox 38 that has a number of outputs. One output of the main engine gearbox 38 is connected to a driving belt sheave 40 driving a driven belt sheave 42 by means of a transmission belt 44. Driven belt sheave 42 drives a gearbox 46 for driving the crop processing units 26, as described in more detail in EP 3 501 260 A1. Main engine gearbox 38 has another output in driving connection with an intermediate gearbox 48 and a hydraulic pump assembly 50 for providing pressurized hydraulic fluid to hydraulic components on the left side of combine 10. Hydraulic pump assembly 50 is an example of a device driven by main engine gearbox 38 and could be a driven element of any other type. Hydraulic pump assembly 50 has on its outer face another interface 45 for driving further driven elements.

Intermediate gearbox 48 is connected to an electric motor 52. Intermediate gearbox 48 and electric motor 52 form an electric motor assembly 31.

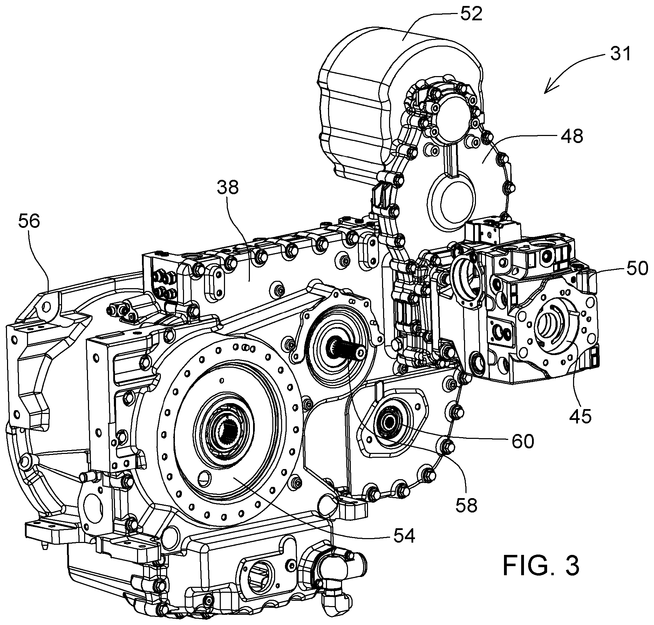

Fig. 3 shows a perspective view of main engine gearbox 30 with the intermediate gearbox 48 and the motor 52 and the hydraulic pump assembly 50. Main engine gearbox 38 has a flange 56 mounted to engine 36 and an output flange 54 for mounting driving belt sheave 40. Further outputs 58, 60 on main engine gearbox 38 are for the unloading auger conveyors 32 and for a lubrification pump. Other outputs on the other face of main engine gearbox 30, opposite from the face shown in fig. 3, can be provided for a hydraulic pump for providing pressurized hydraulic fluid to hydraulic components on the right side of combine 10 and for another lubrification pump.

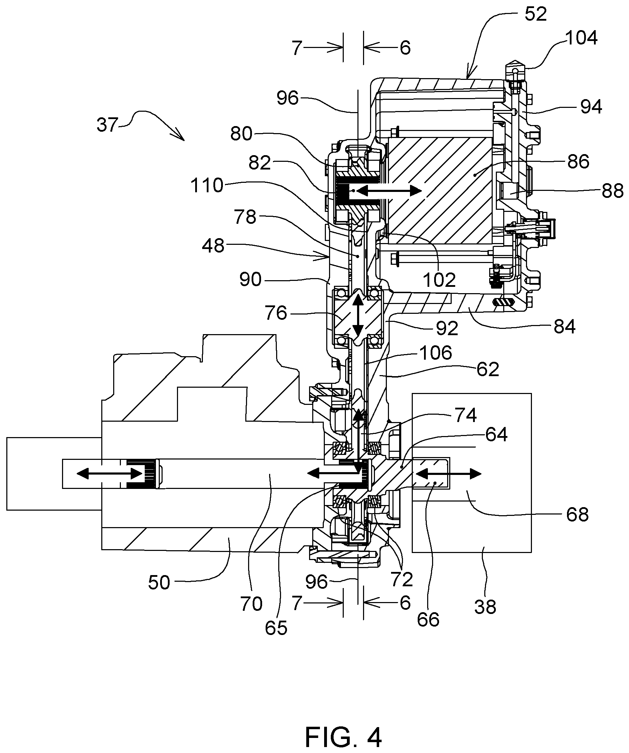

As shown in fig. 4, intermediate gearbox 48 comprises a gearbox housing 62. Gearbox housing 62 encloses an input/output shaft 64 rotatably supported in the lower area of gearbox housing 62 on bearings 72. Input/output shaft 64 has an outwardly projecting end 66 cooperating with an output shaft 68 of main engine gearbox 38. A drive shaft 70 of hydraulic pump assembly 50 has an outwardly projecting end engaging with a mating recess 65 in input/output shaft 64. The outwardly projecting ends of drive shaft 70 and input/output shaft 64 are identical and thus mating and the hydraulic pump assembly 50 can hence be, when intermediate gearbox 48 is removed from main engine gearbox 30 and hydraulic pump assembly 50, be directly mounted on the main engine gearbox 38. Thus, intermediate gearbox 48 with electric motor 52 can be provided as an option to be inserted between main engine gearbox 38 and hydraulic pump assembly 50, while combines 10 without intermediate gearbox 48 and electric motor 52 have hydraulic pump assembly 50 directly mounted on the main engine gearbox 38. In other words, electric motor assembly 31 with intermediate gearbox 48 and electric motor 52 is an option that can be mounted (or not mounted, when hydraulic pump assembly 50 is directly mounted to main engine gearbox 38) on the production line of combine 10 or be retrofitted.

On input/output shaft 64, a first gear 74 is mounted, meshing with a second gear 78 supported on a hub 76. Second gear 78 meshes with a third gear 80 mounted on a shaft 82 of a rotor 88 of the electric motor 52 mounted within a motor housing 84 of electric motor 52. The rotor 88 interacts with a stator 86 of electric motor 52. As indicated by the arrows in fig. 4, torque can be transmitted from electric motor 52 via the gears 80, 78, 74 and input/output shaft 64 to main engine gearbox 38 and hydraulic pump assembly 50 and vice versa. The electric motor 52 can thus provide additional torque to the driven components of combine 10 if needed ("boost") or be used as generator for charging a battery once engine 36 provides sufficient torque for driving the driven components of combine 10. In other words, electric motor 52 provides a hybrid drive for the combine 10. It would also be possible to use electric motor 52 to move the combine 10 or parts thereof when engine 36 is not in operation.

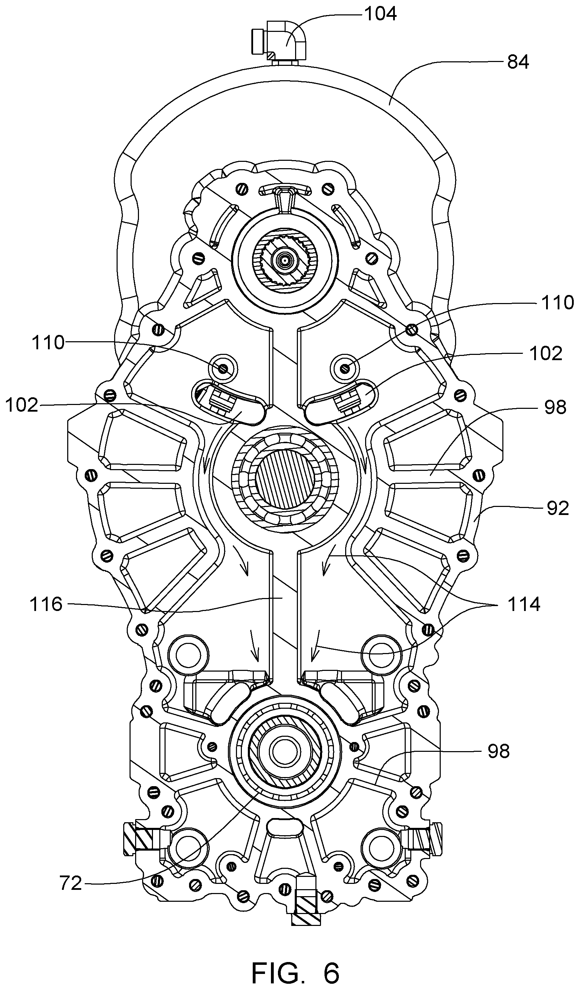

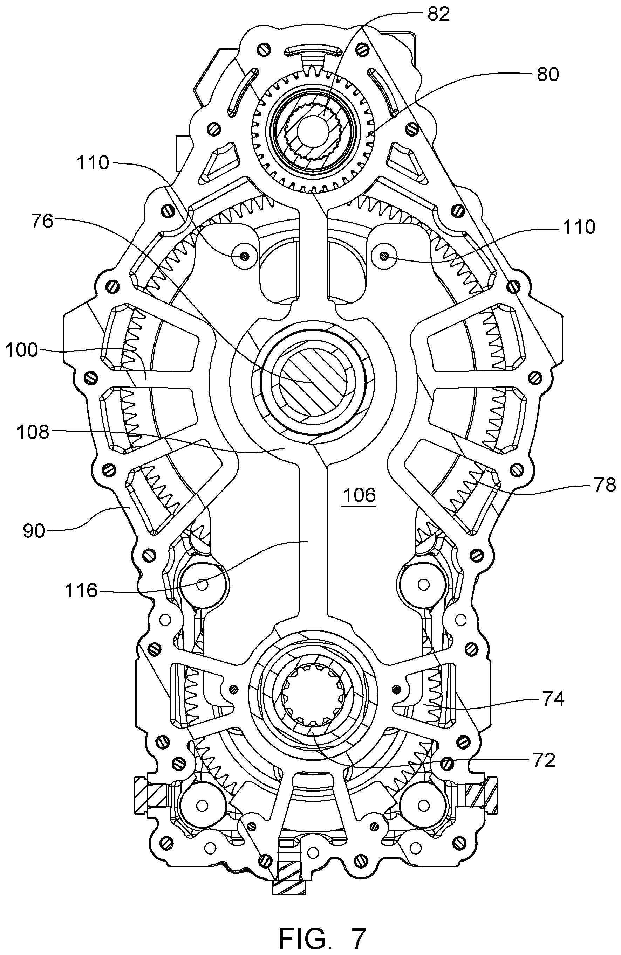

Gearbox housing 62 comprises a first part 92, which is in the embodiment shown formed unitarily with motor housing 84 of the motor 52. Motor housing 84 is closed by a cover 94. Gearbox housing 62 also has a second part 90. Both parts 90, 92 of gearbox housing 62 enclose between them the gears 74, 78, 80 and are separated along a line 96 extending vertically in the plane of the drawing of fig. 4. A vertical section through intermediate gearbox 48 along lines 6-6 of fig. 4 is shown in fig. 6, while fig. 7 shows a view into intermediate gearbox 48 along lines 7-7 of fig. 4. The parts 90, 92 are preferably metal castings.

Parts 92, 90 of gearbox housing 62 form a hollow cavity in which gears 74, 78, 80 are accommodated. The first part 92 of gearbox housing 62 has ridges 98 adjacent gears 74, 78. The ridges 98 extend radially and have parts partially surrounding bearing 72 of gear 74 and the hub of gear 78. The second part 90 of gearbox housing 62 has ridges 100 adjacent gears 74, 78. The ridges 100 extend radially and have parts partially surrounding bearing 72 of gear 74 and the hub of gear 78. A central ridge 116 on both parts 90, 92 extends along line 96, and another ridge 108 on part 90 runs around hub 76.

Electric motor 52 is cooled by means of a liquid lubricant like oil, which is introduced into motor housing 84 through an upper inlet 104. Openings 102 between the interior of motor housing 84 and the interior of gearbox housing 62 are used as drain for this lubricant. A first portion of the lubricant from openings 102 flows through holes 110 provided within flow separation plate 106 and to the gears 82, 78 and 74 and lubricates them and their bearings. A second portion of the lubricant, preferably the larger part thereof, is guided between a flow separation plate 106 and the part 92 of gearbox housing 62. This flow separation plate 106 is located between the gears 74, 78 and the inner wall of gearbox housing 62. The ridges 100 provide a sufficient distance between the gears 74, 78 and the inner wall of gearbox housing 62 to form a channel through which the lubricant can flow, as indicated by the arrows 114 in fig. 6.

The lubricant finally enters into the lowest part of motor housing 84 and flows into the main engine gearbox 38 and/or the hydraulic pump assembly 50 though a gap between the input/output shaft 66 and the adjacent part of the gearbox housing 62 and then is fed back by a pump to inlet opening 104, preferably after cooling. Holes 112 on the lower end of flow separation plate 106 enable lubricant flow from the first portion to the bearings 72 at the side facing hydraulic pump assembly 50 and/or lubricant flow from the second portion within the channel between flow separation plate 106 and part 92 to the other bearings 72 at the side facing main engine gearbox 38. Flow separation plate 106 and the holes 110 are positioned adjacent to the openings 102 in a manner to split the lubricant flow to the desired first and second portions flowing along the gears 82, 78, 74 on one hand and between the flow separation plate 106 and part 92 on the other hand.

## Claims

1. An electric motor assembly (31) including an intermediate gearbox (48) and an electric motor (52), wherein the intermediate gearbox (48) comprises a gearbox housing (62) containing gears (74, 78, 80) connecting a rotor (88) of the electric motor (52) to an input/output shaft (64) of the intermediate gearbox (48), **characterized in that** the input/output shaft (64) has an outwardly projecting end (66) on a first side of the gearbox housing (62) of the intermediate gearbox (48) and a recess (65) a second side of the gearbox housing (62), the projecting end (66) matching with the recess (65).

2. The electric motor assembly (31) of claim 1, adapted to be, in particular as a retrofit, mounted or being mounted between a main engine gearbox (38) of a combine harvester (10) and a driven device, in particular a hydraulic pump assembly (50).

3. An agricultural combine (10) with an engine (36) driving a main engine gearbox (38), the main engine gearbox (38) having an output shaft (68) connected to the input/output shaft (64) of the intermediate gearbox (48) of the electric motor assembly (31) of claim 1 or 2.

4. The combine (10) of claim 3, wherein the electric motor (52) is, in a generator mode, operable to charge a battery and, in a boost mode, to provide rotational power to driven elements of combine (10).

5. An electric motor assembly (31) including an intermediate gearbox (48) and an electric motor (52), in particular according to claim 1 or 2, wherein the intermediate gearbox (48) comprises a gearbox housing (62) containing gears (74, 78, 80) connecting a rotor (88) of the electric motor (52) to an input/output shaft (64) of the intermediate gearbox (48), wherein the electric motor (52) is mounted in a motor housing (84) with a lubricant inlet (104), **characterized in that** motor housing (84) has at least one opening (102) enabling lubricant flow from the motor housing (84) into the gearbox housing (62).

6. The electric motor assembly (31) of claim 5, wherein a flow separation plate (106) is adapted to divide the lubricant flow through the gearbox housing (62) into a first portion flowing along the gears (74, 78, 80) and a second portion flowing, separate from the first portion, between the flow separation plate (106) and a wall of the gearbox housing (62).

7. The electric motor assembly (31) of claim 6, wherein the wall of the gearbox housing (62) adjacent the flow separation plate (106) has upstanding ridges (98) spacing the flow separation plate (106) from the wall of the gearbox housing (862) and leaving a channel through which the lubricant flows.

8. The electric motor assembly (31) of claim 6 or 7, wherein the flow separation plate (106) has at least one hole (110) in the vicinity of the opening (102) between the motor housing (84) and the gearbox housing (62).

9. The electric motor assembly (31) of one of claims 6 to 8, wherein the gears (74, 78, 80) and the flow separation plate (106) are sandwiched between two parts (90, 92) of the gearbox housing (48).

10. The electric motor assembly (31) of one of claims 5 to 9, wherein the electric motor (52) is located above the input/output shaft (64).

11. The electric motor assembly (31) of one of claims 5 to 10, wherein the lubricant is drained from the gearbox housing (62) through a gap between the input/output shaft (62) and the gearbox housing (62).

12. The electric motor assembly (31) of one of claims 5 to 11, wherein the motor housing (84) is unitary with the gearbox housing (62).

## Amended claims

### Amended claims in accordance with Rule 137(2) EPC.

1. An electric motor assembly (31) including an intermediate gearbox (48) and an electric motor (52), wherein the intermediate gearbox (48) comprises a gearbox housing (62) containing gears (74, 78, 80) connecting a rotor (88) of the electric motor (52) to an input/output shaft (64) of the intermediate gearbox (48) such that torque can be transmitted from the electric motor (52) to the input/output shaft (54) or vice versa, wherein the input/output shaft (64) has an outwardly projecting end (66) on a first side of the gearbox housing (62) of the intermediate gearbox (48) and a recess (65) at a second side of the gearbox housing (62), **characterized in that** the projecting end (66) matches with the recess (65) such that the intermediate gearbox (48) can be mounted in a retrofitting manner or not needing modification of an existing machinery design between two elements with matching shafts (68, 70) with one of the shafts (70) matching with the recess (65) and matching with the other shaft (68) and other one of the shafts (68) matching with the outwardly projecting end (66).

2. The electric motor assembly (31) of claim 1, adapted to be mounted or being mounted between a main engine gearbox (38) of a combine harvester (10) and a driven device, in particular a hydraulic pump assembly (50).

3. The electric motor assembly (31) according to claim 1 or 2, wherein the electric motor (52) is mounted in a motor housing (84) with a lubricant inlet (104), **characterized in that** motor housing (84) has at least one opening (102) enabling lubricant flow from the motor housing (84) into the gearbox housing (62).

4. The electric motor assembly (31) of claim 3, wherein a flow separation plate (106) is adapted to divide the lubricant flow through the gearbox housing (62) into a first portion flowing along the gears (74, 78, 80) and a second portion flowing, separate from the first portion, between the flow separation plate (106) and a wall of the gearbox housing (62).

5. The electric motor assembly (31) of claim 4, wherein the wall of the gearbox housing (62) adjacent the flow separation plate (106) has upstanding ridges (98) spacing the flow separation plate (106) from the wall of the gearbox housing (862) and leaving a channel through which the lubricant flows.

6. The electric motor assembly (31) of claim 4 or 5, wherein the flow separation plate (106) has at least one hole (110) in the vicinity of the opening (102) between the motor housing (84) and the gearbox housing (62).

7. The electric motor assembly (31) of one of claims 4 to 6, wherein the gears (74, 78, 80) and the flow separation plate (106) are sandwiched between two parts (90, 92) of the gearbox housing (48).

8. The electric motor assembly (31) of one of claims 3 to 7, wherein the electric motor (52) is located above the input/output shaft (64).

9. The electric motor assembly (31) of one of claims 3 to 8, wherein the lubricant is drained from the gearbox housing (62) through a gap between the input/output shaft (62) and the gearbox housing (62).

10. The electric motor assembly (31) of one of claims 4 to 9, wherein the motor housing (84) is unitary with the gearbox housing (62).

11. An agricultural combine (10) with an engine (36) driving a main engine gearbox (38), the main engine gearbox (38) having an output shaft (68) connected to the input/output shaft (64) of the intermediate gearbox (48) of the electric motor assembly (31) of one of claims 1 to 10.

12. The combine (10) of claim 11, wherein the electric motor (52) is, in a generator mode, operable to charge a battery and, in a boost mode, to provide rotational power to driven elements of combine (10).
